Europäisches Patentamt

European Patent Office

Office européen des brevets

(19)

(11) Publication number: **0 031 636**
**B1**

(12) **EUROPEAN PATENT SPECIFICATION**

(45) Date of publication of patent specification: **14.03.84**

(21) Application number: **80303815.7**

(22) Date of filing: **28.10.80**

(51) Int. Cl.³: **C 08 J 9/00, C 08 L 25/16,**
**C 08 K 3/22, C 08 K 5/06**

(54) Fire resistant foam insulation.

(30) Priority: **31.12.79 US 108901**

(43) Date of publication of application:
**08.07.81 Bulletin 81/27**

(45) Publication of the grant of the patent:
**14.03.84 Bulletin 84/11**

(84) Designated Contracting States:
**BE DE FR GB IT NL**

(56) References cited:
**US - A - 3 631 132**
**US - A - 3 770 668**
**US - A - 4 059 545**

(73) Proprietor: **MOBIL OIL CORPORATION**
**150 East 42nd Street**
**New York New York 10017 (US)**

(72) Inventor: **Canterino, Peter John**
**39 Mary Drive**
**Towaco New Jersey 07082 (US)**

(74) Representative: **West, Alan Harry**
**Mobil Court 3 Clements Inn**
**London WC2A 2EB (GB)**

Courier Press, Leamington Spa, England.

# 0 031 636

## Fire resistant foam insulation

This invention is directed to improved fire resistant foam insulation.

Fire retardant polystyrene foam as disclosed in, for example, US—A—3631132 has been proposed for use as an insulation material but if it is exposed to flame or fire, it may melt, flow and cause the fire to spread.

The present invention provides cross-linked, flame retarded poly(p-methylstyrene) foam insulation. This insulation does not melt and flow and thus does not have the disadvantages of polystyrene foam material. The insulation according to the present invention may be made by incorporating a flame retarding amount of flame retardant material into poly(p-methylstyrene), foaming the resultant composition, and cross-linking the polymer.

The monomer used in preparing the homopolymer or copolymers from which the foam insulation of this invention is made is p-methylstyrene. Mixtures of methylstyrene isomers rich in p-methylstyrene may be used, especially mixtures containing at least 90 weight percent, preferably 95 weight percent, p-methylstyrene and less than 0.1 weight percent o-methylstyrene with the balance being m-methylstyrene. A typical mixture contains, by weight, about 95 percent p-methylstyrene, about 5 percent m-methylstyrene, and less than about 0.05 percent o-methylstyrene. These mixtures are obtained by catalytic dehydrogenation of the mixtures of ethylmethyl benzene isomers described in U.S. Patent No. 4,086,287. The mixtures themselves are described in our DE—OS—2821589.

The paramethylstyrene polymers which may be used are homopolymers and copolymers of p-methylstyrene or p-methylstyrene-rich isomer mixtures. Copolymers containing from 1 to 10 weight percent conjugated diene, such as butadiene and isoprene are preferred copolymers. The polymerization reaction may be carried out by using methods and catalysts well known in the art for polymerizing styrene. The reaction can be carried out, for example, in solution, bulk, suspension, or emulsion.

Blends of the paramethylstyrene polymers with other polymers may be used. A particularly preferred blend is of the paramethylstyrene polymer with polyethylene resin because the polyethylene resin has been found to assist the cross-linking of the paramethylstyrene polymer.

The flame retardant may be any of the well known flame retardants for thermoplastic polymers, including but not limited to the chlorinated paraffins containing 40 to 70 weight percent chlorine (Chlorowax trademark) haloorganophosphorous compounds, and inorganic fluoborates. The flame retardant can be a single material or a mixture of several materials. One particular flame retardant is the addition product of a phosphorus, carboxylic or sulfonic acid with a bicyclic phosphite, as disclosed in U.S. Patents Nos. 3,789,091 and 3,849,368. Typical mixtures are disclosed in U.S. Patent No. 3,635,866. Other useful phosphonate mixtures are disclosed in U.S. Patent No. 4,144,387. The amounts of flame retardant will vary dependent upon the nature of the materials used. Generally, they will be from 2 to 30 percent, preferably 4 to 16 percent, based upon the weight of the total composition.

The flame retardant can be incorporated into the p-methylstyrene polymer by any of the methods well known in the art. These include Banbury (trademark) mixer, differential speed mill, and extruder mixing. The desired amount of flame retardant may be metered with the polymer into the hopper of an extrusion apparatus.

The blend of p-methylstyrene polymer and flame retardant may be foamed and formed into suitable shapes for insulation, such as boards, sheets or blocks.

The foamed insulation may be prepared from the polymer or copolymer blends by any suitable and convenient method. The general methods of forming foamed articles are described in U.S. Patent No. 3,444,283. A preferred method is the direct injection extrusion operation described in this patent. U.S. Patent No. 3,619,445 describes the complete direct injection extrusion foam lines. Nucleating or cell size control agents can be used, as described in U.S. Patent No. 3,444,283.

After it has been formed, the foam insulation is cross-linked. This can be effected by chemical means, using known cross-linking agents, such as peroxides. Also, cross-linking can be effected by ionizing radiation, including shortwavelength, highly energetic, penetrating rays such as gamma rays, X-rays, and sub-atomic particles accelerated in particle accelerators such as cyclotrons, betatrons, synchrotrons, and linear accelerators. The effect of irradiating the shaped articles is to cross-link the poly(p-methylstyrene). The irradiation dose is suitably between 30 and $70 \times 10^4$ J/kg (megarads), preferably between 50 and $60 \times 10^4$ J/kg (megarads). If a cross-linking catalyst or accelerator is used, the dose can be lower, e.g. about $5 \times 10^4$/J/kg (megarads).

Example

Preparation of flame retardant foam.

The following materials were used:

PPMS — poly(p-methylstyrene), 97% by weight para, less than 0.5% by weight ortho isomer.

PS 110S — commercial polystyrene.

$Sb_2O_3$ — Antimony Oxide.

Tribase AG — lead sulphate, tribasic-stabilizer for flame retardant (trademark).
Firemaster 680—brominated diphenyl ether flame retardant (trademark).
Celogen AZ — Azidocarbonamide (trademark).
Dicup — dicumene peroxide (trademark).
The compositions shown in Table 1 below were blended in a Brabender mixer as follows:

Set Brabender for 150°C and 35 rpm
Add polymer over 10 min. period
Add $Sb_2O_3$ over a 2 min. period
Add Tribase over a 1 min. period
Add Firemaster 680 over a 2 min. period
Add Celogen AZ over a 1/2 min. period
Add Dicup over a 1/2 min. period
Continue to blend for 2 minutes.

Fifteen-gram samples of each formula were compression molded into plaques at a temperature of 200°C, 6 minutes, at a pressure of 275000 kPa. Plaques were 20×20 cm, and 0.4 mm thick. Upon release of pressure, the molten polymer foamed, and the plaque was dropped into a tray of water to cool it. The best foam was obtained from the PPMS cross-linked with Dicup (Foams B and F).

Samples of the foams measuring about 2×1 cm were placed in toluene. Samples D and G disintegrated. Samples B and F swelled but remained intact, showing that they were cross-linked.

Burning tests

A tripod with two strips of metal placed on it parallel to each other and allowed to leave a 20 mm opening in the center. The foamed specimens were placed on the tripod and a bunsen burner with a 75 mm blue flame placed under the opening with the flame in contact with the sample. The hood was turned off and air flow minimized during the test.

Sample D (the non-cross-linked PPMS sample) melted almost immediately (12 sec.) and flowed away from the flame, some dripping to the hood floor. The same happened with Sample G, a polystyrene formulation with peroxide present. This shows that polystyrene cannot give cross-linked foams as PPMS does.

Samples B and F represent cross-linked PPMS. B contained some polyethylene resin to help the cross-linking of the PPMS.

Samples B and F behaved the same; they did not melt and flow away. After 60 seconds of contact with the flame of the bunsen burner, the flame had still not penetrated the foam. All foams were self-extinguishing: Upon removal of flame, no burning was evident.

The formulations and burn test results are set forth in the Table below.

TABLE 1
Formulations for flame retardant foams

|  | B | D | F | G |
|---|---|---|---|---|
| PPMS 4497 (parts by weight) | 40 | 40 | 40 | — |
| PS 110S (parts by weight | — | — | — | 40 |
| $Sb_2O_3$ (parts by weight) | 4.0 | 4.0 | 4.0 | 4.0 |
| Tribase AG (parts by weight) | 1.2 | 1.2 | 1.2 | 1.2 |
| Firemaster 680 (parts by weight) | 8.0 | 8.0 | 8.0 | 8.0 |
| Celogen AZ 199 (parts by weight | 0.8 | 0.8 | 0.8 | 0.8 |
| Polymist A 12 (parts by weight) | 0.4 | 0.4 | — | — |
| Dicup (parts by weight) | 0.4 | — | 0.4 | 0.4 |
| Time to Melt and Drip, sec. | >60 | 12 | >60 | 12 |

## Claims

1. A foam insulation material comprising a flame-retardant and a foamed, cross-linked polymer of methylstyrene containing at least 90% by weight of the para isomer.

2. A foam insulation material according to Claim 1 in which the methylstyrene contains at least 95% by weight of para methylstyrene and less than 0.1% by weight of ortho methylstyrene.

3. A foam insulation material according to Claim 1 or 2 in which the polymer of para methylstyrene is blended with a polyethylene resin.

4. A method of making a foam insulating material which comprises incorporating a flame retardant into a polymer of methylstyrene containing at least 90% by weight of the para isomer, foaming the composition and cross-linking the polymer.

5. A method according to Claim 4 in which the methylstyrene contains at least 95% by weight para methylstyrene and less than 0.1% by weight ortho methylstyrene.

# 0 031 636

6. A method according to Claim 4 or 5 in which the methylstyrene polymer is blended with a polyethylene resin.

7. A method according to any of Claims 4 to 6 in which the polymer is cross-linked chemically by means of a chemical cross-linking agent.

8. A method according to any of Claims 4 to 7 in which the flame retardant comprises a mixture of antimony oxide and a brominated diphenyl ether.

**Patentansprüche**

1. Ein Schaumstoff-Isolationsmaterial mit einem flammhemmenden Bestandteil und einem geschäumten, vernetzten Polymeren aus Methylstyrol, das wenigstens 90 Gew.-% des para-Isomeren enthält.

2. Ein Schaumstoff-Isolationsmaterial nach Anspruch 1, bei dem das Methylstyrol wenigstens 95 Gew.-% para-Methylstyrol und weniger als 0,1 Gew.-% ortho-Methylstyrol enthält.

3. Ein Schaumstoff-Isolationsmaterial nach Anspruch 1 oder 2, bei dem das Polymere des para-Methylstyrols mit einem Polyethylenharz vermischt ist.

4. Ein Verfahren zur Herstellung eines Schaumstoff-Isolationsmaterials, das die Einarbeitung eines flammhemmenden Bestandteils in ein Polymeres von Methylstyrol, das wenigstens 90 Gew.-% des para-Isomeren enthält, Verschäumen der Zusammensetzung und Vernetzen des Polymeren umfaßt.

5. Ein Verfahren nach Anspruch 4, bei dem das Methylstyrol wenigstens 95 Gew.-% para-Methylstyrol und weniger als 0,1 Gew.-% ortho-Methylstyrol enthält.

6. Ein Verfahren nach Anspruch 4 oder 5, bei dem das Methylstyrol-Polymere mit einem Polyethylenharz vermischt ist.

7. Ein Verfahren nach einem der Ansprüche 4 bis 6, bei dem das Polymere mittels eines chemischen Vernetzungsmittels chemisch vernetzt ist.

8. Verfahren nach einem der Ansprüche 4 bis 7, bei dem der flammhemmende Bestandteil eine Mischung aus Antimonoxid und einem bromierten Diphenylether umfaßt.

**Revendications**

1. Un matériau d'isolation en mousse comprenant un ignifuge et un polymère expansé réticulé de méthylstyrène contenant au moins 90% en poids de l'isomère para.

2. Un matériau d'isolation en mousse selon la revendication 1, dans lequel le méthylstyrène contient au moins 95% en poids de p-méthylstyrène et moins de 0,1% en poids d'o-méthylstyrène.

3. Un matériau d'isolation en mousse selon la revendication 1 ou 2, dans lequel le polymère de p-méthylstyrène est mélangé avec une résine de polyéthylène.

4. Un procédé pour préparer un matériau d'isolation en mousse qui comprend l'incorporation d'un ignifuge à un polymère de méthylstyrène contenant au moins 90% en poids de l'isomère para, l'expansion de la composition et la réticulation du polymère.

5. Un procédé selon la revendication 4, dans lequel le méthylstyrène contient au moins 95% en poids de p-méthylstyrène et moins de 0,1% en poids d'o-méthylstyrène.

6. Un procédé selon la revendication 4 ou 5, dans lequel le polymère de méthylstyrène est mélangé avec une résine de polyéthylène.

7. Un procédé selon l'une quelconque des revendications 4 à 6, dans lequel le polymère est réticulé chimiquement au moyen d'un agent réticulant chimique.

8. Un procédé selon l'une quelconque des revendications 4 à 7, dans lequel l'ignifuge comprend un mélange d'oxyde d'antimoine et d'un éther diphénylique bromé.

4